# EUROPEAN PATENT SPECIFICATION

(11) **EP 3 807 561 B1**
(45) Date of publication and mention of the grant of the patent: **13.09.2023**
(21) Application number: 19818591.0
(22) Date of filing: 14.06.2019
(51) Int. Cl.: F16K 39/02, F16K 15/06, F16K 15/18, F16K 47/04, F17C 13/04

(54) **AN ACTUATED VALVE**
BETÄTIGTES VENTIL
SOUPAPE ACTIONNÉE

(30) Priority: 15.06.2018 ZA 201802740
(43) Date of publication of application: 21.04.2021
(73) Proprietor: The Bührmann Trust, 0117 Pretoria (ZA)
(72) Inventor: BÜHRMANN, Rudolph, 0240 Broederstroom (ZA)
(74) Representative: Murgitroyd & Company
(86) International application number: PCT/IB2019/054998
(87) International publication number: WO 2019/239383

(56) References cited:
- CH-A- 423 389
- DE-B- 1 014 810
- DE-C- 563 434
- FR-A1- 2 792 056
- FR-A1- 2 792 056
- GB-A- 677 132
- GB-A- 677 132
- GB-A- 973 914
- GB-A- 973 914
- GB-A- 191 022 512
- GB-A- 191 022 512
- US-A- 6 073 654

## Description

### FIELD OF THE INVENTION

The invention relates to the controlled actuation of a valve that requires opening under a pressure differential by allowing a suitable degree of equalisation across the valve before the valve closure is moved off the valve seat.

### BACKGROUND TO THE INVENTION

Downstream filling across a pressure differential is commonly required in hydraulic systems. It is known to use of an external by-pass passage with a pilot valve or to open a main valve by a limited degree. These are not considered to be desirable methods of achieving pressure equalisation.

The required equalisation may involve either increasing the downstream (outlet side) pressure or reducing the upstream (inlet side) pressure before the main valve is opened.

The valve of the invention may be a modification of an actuated non-return type valve of the kind that is used in the equipment known as a three chamber pump system (3CPS), three chamber pipe feeder system or pressure exchange system (PES).

This equipment requires (on a cold/clean water side) the filling of the chambers (usually three) with high pressure water via a column from the surface through an inlet valve. Thereafter each chamber is drained at low pressure through an outlet valve. The chambers accordingly need to be equalised from low pressure to high pressure before the inlet valve can fully open and, in a second half of each chamber cycle, the chambers need to be equalised from high pressure to low before the outlet valve fully opens.

DE1014810 and GB191022512 disclose known valves according to the preamble of claim 1.

### OBJECT OF THE INVENTION

It is an object of the present invention to provide a valve having a construction that enables adequate pressure equalisation prior to opening, provides for relatively simple operation, and/or is relatively cost effective to maintain.

### SUMMARY OF THE INVENTION

In accordance with the invention there is provided an actuated valve comprising:
a main valve closure and a main valve seat provided inside a body;
the main valve closure is slidably supported within the body for movement between (i) a closed condition against the main valve seat towards an outlet, low pressure side and (ii) an open condition away from the main valve seat towards an inlet, high pressure side; and
the main valve closure biased into the closed condition by a closing spring;
characterised in that:
a by-pass passage extends through the main valve closure with a by-pass valve provided to control flow through the by-pass passage;
the by-pass valve includes a by-pass valve closure and by-pass valve seat located inside a by-pass valve chamber;
the main valve closure has a central guided spindle which extends away from the main valve seat towards the inlet side of the main valve, the by-pass passage extends within the spindle and the by-pass valve is provided adjacent a free end of the spindle with at least one inlet port of the by-pass passage provided through the spindle;
the main valve closure is also guided at a side opposite to the spindle on a hollow cylindrical guide supported from the body with the by-pass passage extending from the spindle and inside the cylindrical guide which provides a by-pass outlet from the by-pass passage;
the by-pass valve seat is annular and the by-pass passage extends through the by-pass valve seat;
a control rod extends from the outlet side of the main valve through the cylindrical guide, along the by-pass passage and through the by-pass valve seat to engage the by-pass valve closure;
the control rod is provided to engage against the by-pass valve closure to apply an opening bias to first open the by-pass valve for a required degree of pressure equalisation across the main valve closure and then move the main valve closure into the open condition; and
the opening bias of the control rod is applied to a first side of the by-pass valve closure and a closing bias towards the by-pass valve seat is provided on a second side of the by-pass valve closure, opposite to the control rod.

The invention further provides:
for a valve as defined in which the closing bias is provided through fluid pressure on the second side of the by-pass valve closure;
for a valve as defined in which the closing bias is provided through a spring bias towards the by-pass valve seat;
for a stepped axial bore that extends through the main valve closure to accommodate the by-pass valve;
for a valve as defined in which the spindle of the main valve closure is guided by a first bearing supported in a collar relative to the body.

The invention still further provides:
for a valve as defined in which the main valve closure is guided at the side opposite to the spindle on a second bearing, the second bearing slidably located on the hollow cylindrical guide supported from the body;
for a valve as defined in which the control rod engages the main valve closure by biasing the by-pass valve closure against an end wall in the by-pass valve chamber; *alternatively,*
for a valve as defined in which the control rod has an engaging formation for engagement with the main valve closure after it has biased the by-pass valve closure away from the by-pass valve seat;
for a valve as defined in which the by-pass valve chamber has an end wall provided by a cap at a free end of the spindle with an opening past the cap into the by-pass valve chamber adjacent the second side of the by-pass valve closure;
for a valve as defined in which labyrinth formations are provided on the control rod (128) adjacent the by-pass valve and inside the by-pass passage around the control rod;for the by-pass valve closure to be made of a hard-wearing material; for the by-pass valve seat to be provided as an annular body made of a hard-wearing material; and for the hard-wearing material to be Tungsten Carbide; and
for the by-pass valve to be a poppet valve.

In accordance with one embodiment of the invention, there is provided:
for an inside of the cylindrical guide to provide a second stage of and an outlet from the by-pass passage;
for a cross-sectional area of the by-pass passage to expand through an outwardly tapered form provided around the control rod from at or near the valve seat to the by-pass passage outlet; for the inside of the cylindrical guide to be outwardly tapered towards or to the outlet from the by-pass passage in a direction of the main valve seat;
for labyrinth formations to be provided on the control rod adjacent the by-pass valve; for labyrinth formations to be provided in the by-pass passage; for the labyrinth formations to be provided in the cylindrical guide; and
for a plurality of radial inlet ports of the by-pass passage to be provided through the spindle.

In accordance with another embodiment of the invention, there is provided:
for inlet ports of the by-pass passage to be longitudinally arranged, extending from a free end of the spindle to feed an annulus adjacent and to the outside of the by-pass valve seat;
for the control rod to extend inside the cylindrical guide to engage against an insert slidably supported inside the cylindrical guide which is engagable against the first side of the by-pass valve closure;
for an axial finger to extend from the insert to engage against the first side of the by-pass valve closure; and
for the insert to provide a dissipator; for the insert to be provided as a housing for a stack of dissipator balls.

### BRIEF DESCRIPTION OF THE DRAWINGS

These and other features of the invention will become more apparent from the following description, made by way of example only, with reference to the accompanying drawings:
- Figure 1: which shows a part cross-sectional side view of (an upper half of) relevant internal components of an actuated valve; and
- Figure 2: which shows a part cross-sectional side view of relevant internal components of an alternative embodiment of an actuated valve, also in accordance with the invention.

### DETAILED DESCRIPTION OF THE INVENTION

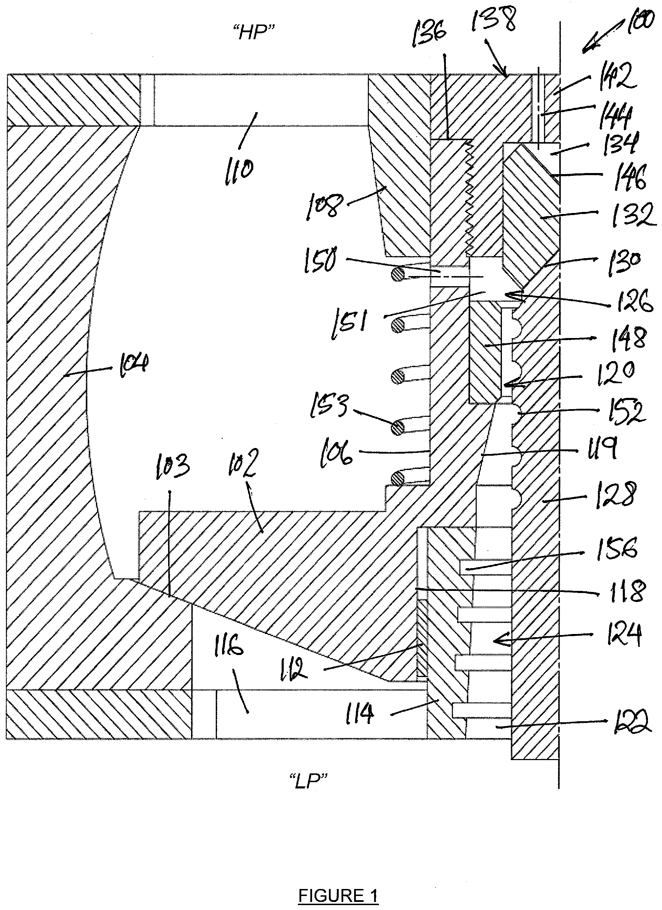

Referring to Figure 1 of the drawings, the components of an actuated valve (100) made and operated in accordance with the invention are shown. The high pressure, supply or inlet side of the valve (100) is marked "HP" and the lower pressure outlet side "LP" in the drawing. A main valve closure (102) is provided as a primary poppet valve closure. The main valve closure (102) will close onto a main valve seat (103) provided inside a valve housing or body (104).

The main valve closure (102) is slidably supported inside the body (104) for movement between a closed condition on the main valve seat (103) and an open condition (wherein the main valve closure (102) moves to the top of the drawing) away from the main valve seat (103). A central, axial spindle (106) extends from the main valve closure (102) away from the main valve seat (103) and through a first bearing (not shown) supported from the body (104). The first bearing (not shown) is located in a collar (108) with first connectors (110) that hold the collar (108) centrally inside the body (104).

The main valve closure (102) is also guided at a side opposite to the spindle (106) by a second bearing (112) that slidably engages on a hollow cylindrical guide (114). The cylindrical guide (114) is similarly supported by second spaced apart connectors (116). The second bearing (112) is secured inside a first socket (118) provided at one end of a stepped axial bore (119) of the main valve closure (102). The axial bore (119) extends through the main valve closure (102) from the first socket (118) to a free end (136) of the spindle (106) and accommodates various components referred to below.

The spindle (106) includes a by-pass passage (120) having an outlet (122) provided through the inside of the supporting cylindrical guide (114), which is coaxial with the spindle (106) and provides a second stage (124) of the by-pass passage (120). The by-pass passage (120) is controlled by a control or filler, by-pass valve (126), which is provided as a secondary poppet valve.

A control rod (128) extends from the outlet side of the valve (100) side adjacent the main valve seat (103), through the cylindrical guide (114) along the by-pass passage (120) to engage against a first side (130) of a floating by-pass valve closure (132). The by-pass valve closure is located inside a chamber (134) provided adjacent the free end (136) of the spindle (106).

The by-pass valve chamber (134) is provided in a sleeve-shaped cap (138) with screw-threaded body that fits into the axial bore (119) at the end (136) of the spindle (106).

The cap (138) may support a seal (not shown) around the by-pass valve closure (132) and includes an end wall (142) with an opening (144) into the by-pass valve chamber (134) adjacent a second side (146) of the by-pass valve closure (132). The end wall (142) provides an extension to the free end (136) of the spindle (106), as shown.

The by-pass valve closure (132) is biased onto an annular by-pass valve seat (148) by fluid pressure at the second side (146) that communicates through the opening (144). The by-pass valve seat (148) is provided as an annular body (in the form of an insert) made of Tungsten Carbide through which the control rod (128) extends to engage the by-pass valve closure (132), which is made of the same material. The by-pass valve seat (148) is located against a step in the axial bore (119).

It will however be appreciated that alternative hard wearing materials with similar or other selected wear characteristics may also be used. The seat for the by-pass poppet valve may also be provided as a surface in the axial bore, for example, and need not be an annular insert.

Inlet ports (150) are radially arranged through the spindle (106) to feed an annulus (151) adjacent and to the outside of the by-pass valve seat (148) and the by-pass valve closure (132). The by-pass passage (120) is outwardly tapered from the by-pass valve seat (148) where it extends within the spindle (106) and along the second stage (124) of the by-pass passage (120), inside of the cylindrical guide (114), which continues with the internal outwardly tapered form to the outlet (122). The control rod (128) has first labyrinth formations (152) that are provided at a region adjacent a working end that engages the by-pass valve closure (132). Second labyrinth formations (156) are also provided inside the cylindrical guide (114).

Operation of the valve (100) will be described where it is used in a 3CPS (not shown) as an actuated non-return or check valve for high pressure charging (as an inlet valve) or low pressure discharging (as an outlet valve) of the chambers. The valve (100) includes a suitable closing spring (153) against which it is opened as an actuated check valve in the manner described below. The actuated check valve will be biased open on demand, as required for operation of the 3CPS.

The control rod (128) is biased with a force that is sufficient, initially to open only the filler, poppet valve (126). The control rod (128) accordingly moves the poppet valve closure (132) off the poppet valve seat (148) into the position shown in Figure 1. This movement of the poppet valve closure (132) is against a biasing force resulting from a high pressure on the side of the valve (100) at the end (136) of the spindle (106).

The opposite (operatively downstream) side of the main valve closure (102) will be at a (relatively) low pressure. The opening of the filler, by-pass poppet valve (126) serves to bring a required degree of pressure equalisation across the main valve (100). In this example, the by-pass valve (126) serves to pressurize a displacement chamber of the 3CPS before opening fully and receiving high pressure incoming cold water from a column connected to the surface.

The cross-sectional area of the by-pass passage (120) and (124) expands, through the outwardly tapered form provided around the control rod (128), to gradually reduce flow velocity through the by-pass passage, which has the desirable effect of reducing noise and/or cavitation. The widening of the by-pass passage and dissipator formations (152) and (156) provided by the labyrinths serve to save the valve components from erosion. The increasing gap and labyrinths also serve to eliminate the usual noise associated with the flow that accompanies such pressure equalisation.

At a certain degree of pressure equalisation, the opening bias force applied to the control rod (128) becomes sufficient to move the main valve closure (102) of the check valve (100) off the main valve seat (103) against the closing spring (153) and higher pressure on the supply side - this will be with a suitably low pressure differential across the main/check valve closure (102) to protect the system. The opening bias force on the control rod (128) will also be sufficient to keep check valve (100) open against the reduced differential pressure. In this open condition, the spindle (106) protrudes through the collar (108).

To close the main check valve (100), the opening bias on the control rod (128) is reduced. The main/check valve closure (102) is moved towards the seat (103) by the check valve spring (153) and the flow resistance over the poppet (102). When the main/check valve closure (102) is close to and in the closed condition (against the main valve seat) the filler valve (126) is still open and provides a by-pass that assists in removing impulses that would otherwise be associated with closing of a check valve in reverse flow direction. The filler valve (126) thereafter closes independently of the check valve (100).

The valve of the invention involves signaling the main/check valve to open which follows after a transfer of the opening force via the filler or control valve.

In the embodiment described, the control rod engages (128) and opens the main valve closure (102) by biasing the poppet valve closure (132) against the end wall (142) in the by-pass valve chamber (134), which is secured to the spindle (106). The end wall (142) accordingly provides a stop.

An alternative embodiment could involve having engaging formations on the control rod (such as an arrangement of spaced apart radial shoulders) that engage a stop formation in a bore of the spindle. These formations will be at a position on the control rod which allows the free end to open the by-pass poppet valve but that need not necessarily be against a wall in the by-pass valve chamber. Once the by-pass poppet has achieved equalisation, the main valve closure will be moved off its seat through the contact at the engaging formations. The arrangement engaging formations on the control rod may be better suited to an embodiment where a closing spring is located on the second side of the poppet closure to bias it onto the poppet seat, for example.

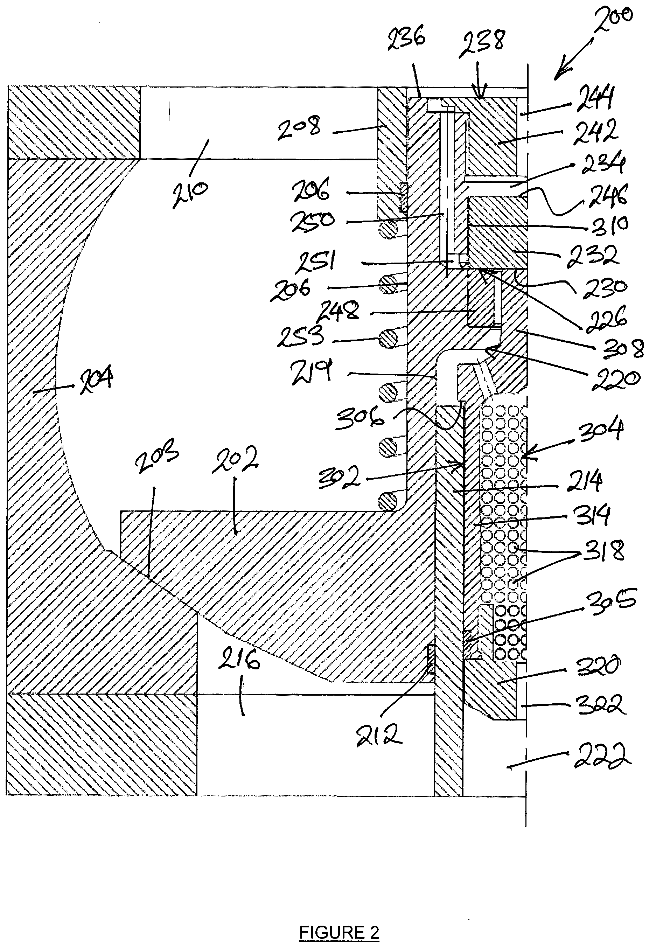

Referring to Figure 2, the components of an alternative embodiment of actuated valve (200) are shown. This second embodiment (200) does not use a rod dissipator arrangement.

A main valve closure (202) will close onto a main valve seat (203) provided inside a valve housing or body (204) and is similarly supported to the first embodiment. A central, axial spindle (206) extends through a first bearing (206) in a collar (208). The main valve closure (202) is also guided at a side opposite to the spindle (206) by a second bearing (212) that slidably engages on a hollow cylindrical guide (214).

A stepped axial bore (219) which extends through the main valve closure (102) to a free end of the spindle (206) accommodates the hollow cylindrical guide (214) at one end and components of a control or filler, by-pass valve (226) referred to below. The spindle (206) includes a by-pass passage (220) having an outlet (222) provided through the inside of the supporting cylindrical guide (214), which is coaxial with the spindle (206). Flow through the by-pass passage (220) is controlled by the by-pass valve (226).

A control rod (not shown) extends from the side of the main valve seat (203) adjacent an outlet of the valve (200), into the portion of the by-pass passage (220) that corresponds to the inside of the cylindrical guide (214) to engage against an insert (302). The by-pass passage (220) extends through the insert (302) which provides a dissipator (304).

The insert (302) is slidably supported inside the cylindrical guide (214) and includes a bearing (305). The insert (302) has an annular shoulder (306) that locates at an inner end of the cylindrical guide (214). An axial protrusion or finger (308) extends from the insert (302) to engage against a first side (230) of a floating by-pass valve closure (232). The by-pass valve closure (232) is located inside a by-pass valve chamber (234) provided near a free end (236) of the spindle (206). The insert (302) and axial finger (308) provide a spacer between the control rod and by-pass poppet valve closure (232).

The by-pass valve chamber (234) is provided in a second socket (310) of the axial bore (219) where it is formed into the free end (236) of the spindle (206). A seal (not shown) may be provided around the by-pass valve closure (232). A cap (238) secures the poppet valve closure (232) in the chamber (234) and includes an end wall (242) with an opening (244) into the chamber (234) adjacent a second side (246) of the by-pass valve closure (232). The by-pass valve closure (232) is biased onto an annular by-pass valve seat (248) by fluid pressure at the second side (246) that communicates through the opening (244).

Inlet ports (250) of the by-pass passage (220) are longitudinally arranged to the outside of the second socket (310), extending from the free end of the spindle (206) to feed an annulus (251) adjacent and to the outside of the by-pass valve seat (248). The by-pass passage (220) extends from inside poppet valve seat (248) around the finger (308) of the insert (302).

The insert (302) is provided as a housing (314) with a removably securable perforated stop (316) which secures a stack of dissipator balls (318) inside the housing (314). A screw-threaded end-cap (320) is provided with a vent (322) from the housing (314) and insert (302), which feeds into the outlet (222) of the by-pass passage (220). It will be appreciated that an alternative arrangement of components may be provided for the dissipation of flow through the by-pass passage. Orifice plates are an example.

The valve (200) includes a suitable closing spring (253) which bias the main valve closure (202) onto its seat (203) and against which the main valve closure (202) is opened as an actuated check valve. The operation of the valve (200) will be as described in relation to the first embodiment above.

The opening of the main/check valve of the invention is achieved using a pushing force applied by the control rod. The arrangement through which such a force is applied is considered to be easier to maintain and more cost effective. One sliding seal is required for the valve - that being on the control rod where it passes through a wall of the body or other encasement.

The valve of the invention serves to:
(a) equalise pressure from a high pressure supply to a low pressure receptacle, chamber or conduit in a rate controlled manner, with low noise, low hydraulic shock and low wear; and
(b) then to open a main (larger) valve to effect substantial flow rates from the inlet to the outlet.

A person skilled in the art will appreciate that a number of changes may be made to the features of the valves as described without departing from the scope of the invention as defined by the appended claims.

Various configurations of the working components of the valve may be used to achieve the beneficial arrangement of working parts and result of the invention. The valve can also be used where a significant pressure differential is not or not always present during its operation.

## Claims

1. An actuated non-return valve (100; 200) comprising:
a main valve having a main valve closure (102; 202) and a main valve seat (103; 203) provided inside a body (104; 204);
the main valve closure (102; 202) is slidably supported within the body (104; 204) for movement between (i) a closed condition against the main valve seat (103; 203) towards an outlet, low pressure side ("LP") and (ii) an open condition away from the main valve seat (103; 203) towards an inlet, high pressure side ("HP");
the main valve closure (102; 202) biased into the closed condition by a closing spring (153; 253); a by-pass passage (120; 124) extends through the main valve closure (102; 202) with a by-pass valve (126; 226) provided to control flow through the by-pass passage (120; 124); and
the by-pass valve (126; 226) includes a by-pass valve closure (132; 232) and a by-pass valve seat (148; 248) located inside a by-pass valve chamber (134; 234);
**characterised in that**:
the main valve closure (102; 202) has a central guided spindle (106; 206) which extends away from the main valve seat (103) towards the inlet side of the main valve, the by-pass passage (120; 124) extends within the spindle (106; 206) and the by-pass valve (126; 226) is provided adjacent a free end (136) of the spindle (106; 206) with at least one inlet port (150) of the by-pass passage (120; 124) provided through the spindle (106; 206);
the main valve closure (102; 202) is also guided at a side opposite to the spindle (106; 206) on a bearing (112, 212) slidably located on a hollow cylindrical guide (114; 214) supported from the body (104; 204) with the by-pass passage (120; 124) extending from the spindle (106; 206) and inside the cylindrical guide (114; 214) which provides a by-pass outlet (122) from the by-pass passage (120; 124);
the by-pass valve seat (148; 248) is annular and the by-pass passage (120; 124) extends through the by-pass valve seat (148; 248) with a control rod (128) that extends from the outlet side of the main valve through the cylindrical guide (114; 214), along the by-pass passage (120; 124) and through the by-pass valve seat (148; 248) to engage the by-pass valve closure (132; 232);
the control rod (128) is provided to engage against the by-pass valve closure (132; 232) to apply an opening bias to first open the by-pass valve (126; 226) for a required degree of pressure equalisation across the main valve closure (102; 202) and then move the main valve closure (102; 202) into the open condition; and
the opening bias of the control rod (128) is applied to a first side (130; 230) of the by-pass valve closure (132; 232) and a closing bias towards the by-pass valve seat (148; 248) is provided on a second side (146; 246) of the by-pass valve closure (132; 232), opposite to the control rod (128).

2. A valve as claimed in claim 1 in which the closing bias is provided through fluid pressure on the second side (146; 246) of the by-pass valve closure (132; 232).

3. A valve as claimed in claim 1 in which the closing bias is provided through a spring bias towards the by-pass valve seat (148; 248).

4. A valve as claimed in claim 1 in which the spindle (106; 206) of the main valve closure (102; 202) is guided by another bearing supported in a collar (108) relative to the body (103).

5. A valve as claimed in claim 1 in which the control rod (128) engages the main valve closure (102; 202) by biasing the by-pass valve closure (132; 232) against an end wall (142; 242) in the by-pass valve chamber (134; 234).

6. A valve as claimed in claim 1 in which the control rod (128) has an engaging formation for engagement with the main valve closure (102; 202) after it has biased the by-pass valve closure (132; 232) away from the by-pass valve seat (148; 248).

7. A valve as claimed in claim 3 in which the by-pass valve chamber (134; 234) has an end wall (142; 242) provided by a cap (138; 238) at a free end (136) of the spindle (106; 206) with an opening (144; 244) past the cap (138; 238) into the by-pass valve chamber (134; 234) adjacent the second side (146; 246) of the by-pass valve closure (132; 232).

8. A valve as claimed in claim 1 in which a cross-sectional area of the by-pass passage (120; 124) expands through an outwardly tapered form provided around the control rod (128) from at or near the by-pass valve seat (148) towards or to a by-pass passage outlet (122).

9. A valve as claimed in claim 8 in which labyrinth formations (152; 156) are provided on the control rod (128) adjacent the by-pass valve (126) and inside the by-pass passage (120; 124) around the control rod (128).

## Patentansprüche

1. Betätigtes Rückschlagventil (100; 200), aufweisend:
ein Hauptventil mit einem innerhalb eines Körpers (104; 204) vorgesehenen Hauptventilverschluss (102; 202) und Hauptventilsitz (103; 203);
wobei der Hauptventilverschluss (102; 202) innerhalb des Körpers (104; 204) verschiebbar aufgenommen ist, um sich zwischen (i) einem geschlossenen Zustand gegen den Hauptventilsitz (103; 203) in Richtung eines Auslasses, Niederdruckseite ("LP"), und (ii) einem offenen Zustand weg von dem Hauptventilsitz (103; 203) in Richtung eines Einlasses, Hochdruckseite ("HP"), zu bewegen;
der Hauptventilverschluss (102; 202) durch eine Schließfeder (153; 253) in den geschlossenen Zustand vorgespannt ist; sich ein Umgehungskanal (120; 124) durch den Hauptventilverschluss (102; 202) erstreckt, wobei ein Umgehungsventil (126; 226) vorgesehen ist, um den Fluss durch den Umgehungskanal (120; 124) zu steuern; und
das Umgehungsventil (126; 226) einen sich innerhalb einer Umgehungsventilkammer (134; 234) befindlichen Umgehungsventilverschluss (132; 232) und Umgehungsventilsitz (148; 248) umfasst;
**dadurch gekennzeichnet, dass**:
der Hauptventilverschluss (102; 202) eine zentrale geführte Spindel (106; 206) aufweist, die sich von dem Hauptventilsitz (103) weg zu der Einlassseite des Hauptventils erstreckt, der Umgehungskanal (120; 124) sich innerhalb der Spindel (106; 206) erstreckt und das Umgehungsventil (126; 226) benachbart zu einem freien Ende (136) der Spindel (106; 206) mit mindestens einer Einlassöffnung (150) des durch die Spindel (106; 206) vorgesehenen Umgehungskanals (120; 124) vorgesehen ist;
der Hauptventilverschluss (102; 202) auch an einer der Spindel (106; 206) gegenüberliegenden Seite an einem Lager (112, 212) geführt ist, das sich verschiebbar an einer von dem Körper (104; 204) aufgenommenen hohlzylindrischen Führung (114; 214) befindet, wobei sich der Umgehungskanal (120; 124) von der Spindel (106; 206) und innerhalb der zylindrischen Führung (114; 214) erstreckt, die einen Umgehungsauslass (122) aus dem Umgehungskanal (120; 124) vorsieht;
der Umgehungsventilsitz (148; 248) ringförmig ist und sich der Umgehungskanal (120; 124) durch den Umgehungsventilsitz (148; 248) mit einer Steuerstange (128) erstreckt, die sich von der Auslassseite des Hauptventils durch die zylindrische Führung (114; 214) entlang des Umgehungskanals (120; 124) und durch den Umgehungsventilsitz (148; 248) erstreckt, um mit dem Umgehungsventilverschluss (132; 232) in Eingriff zu gelangen;
die Steuerstange (128) vorgesehen ist, gegen den Umgehungsventilverschluss (132; 232) in Eingriff zu gelangen, um eine Öffnungsvorspannung auszuüben, um zuerst das Umgehungsventil (126; 226) für ein erforderliches Maß an Druckausgleich quer über den Hauptventilverschluss (102; 202) zu öffnen und dann den Hauptventilverschluss (102; 202) in den offenen Zustand zu bewegen; und
die Öffnungsvorspannung der Steuerstange (128) an einer ersten Seite (130; 230) des Umgehungsventilverschlusses (132; 232) ausgeübt wird und eine Schließvorspannung in Richtung des Umgehungsventilsitzes (148; 248) an einer der Steuerstange (128) gegenüberliegenden zweiten Seite (146; 246) des Umgehungsventilverschlusses (132; 232) vorgesehen ist.

2. Ventil nach Anspruch 1, wobei die Schließvorspannung durch Fluiddruck auf der zweiten Seite (146; 246) des Umgehungsventilverschlusses (132; 232) vorgesehen ist.

3. Ventil nach Anspruch 1, wobei die Schließvorspannung durch eine Federvorspannung in Richtung des Umgehungsventilsitzes (148; 248) vorgesehen ist.

4. Ventil nach Anspruch 1, wobei die Spindel (106; 206) des Hauptventilverschlusses (102; 202) durch ein in einem Kragen (108) aufgenommenes anderes Lager relativ zu dem Körper (103) geführt ist.

5. Ventil nach Anspruch 1, wobei die Steuerstange (128) mit dem Hauptventilverschluss (102; 202) in Eingriff gelangt, indem sie den Umgehungsventilverschluss (132; 232) gegen eine Endwand (142; 242) in der Umgehungsventilkammer (134; 234) vorspannt.

6. Ventil nach Anspruch 1, wobei die Steuerstange (128) eine Eingriffsausbildung zum Eingriff mit dem Hauptventilverschluss (102; 202) aufweist, nachdem sie den Umgehungsventilverschluss (132; 232) weg von dem Umgehungsventilsitz (148; 248) vorgespannt hat.

7. Ventil nach Anspruch 3, wobei die Umgehungsventilkammer (134; 234) eine Endwand (142; 242) aufweist, die durch eine Kappe (138; 238) an einem freien Ende (136) der Spindel (106; 206) mit einer Öffnung (144; 244) vorbei an der Kappe (138; 238) in die Umgehungsventilkammer (134; 234) benachbart zu der zweiten Seite (146; 246) des Umgehungsventilverschlusses (132; 232) vorgesehen ist.

8. Ventil nach Anspruch 1, wobei sich eine Querschnittsfläche des Umgehungskanals (120; 124) über eine sich nach außen konisch zulaufende um die Steuerstange (128) herum vorgesehen Form von an dem oder der Nähe des Umgehungsventilsitzes (148) in Richtung eines oder zu einem Umgehungskanalauslass (122) erstreckt.

9. Ventil nach Anspruch 8, wobei Labyrinthausbildungen (152; 156) an der Steuerstange (128) benachbart zu dem Umgehungsventil (126) und innerhalb des Umgehungskanals (120; 124) um die Steuerstange (128) herum vorgesehen sind.

## Revendications

1. Soupape de non-retour actionnée (100 ; 200) comprenant :
une soupape principale ayant une fermeture de soupape principale (102 ; 202) et un siège de soupape principal (103 ; 203) situés à l'intérieur d'un corps (104 ; 204) ;
la fermeture de soupape principale (102 ; 202) étant supportée de manière coulissante à l'intérieur du corps (104 ; 204) pour se déplacer entre (i) un état fermé contre le siège de soupape principal (103 ; 203) vers un côté basse pression de sortie (« LP ») et (ii) un état ouvert à l'opposé du siège de soupape principal (103 ; 203) vers un côté haute pression d'entrée (« HP ») ;
la fermeture de soupape principale (102 ; 202) étant sollicitée à l'état fermé par un ressort de fermeture (153 ; 253) ; un passage de dérivation (120 ; 124) traversant la fermeture de soupape principale (102 ; 202) avec une soupape de dérivation (126 ; 226) fournie pour réguler le débit à travers le passage de dérivation (120 ; 124) ; et
la soupape de dérivation (126 ; 226) comprenant une fermeture de soupape de dérivation (132 ; 232) et un siège de soupape de dérivation (148 ; 248) situé à l'intérieur d'une chambre de soupape de dérivation (134 ; 234) ; **caractérisée en ce que** :
la fermeture de soupape principale (102 ; 202) a une tige guidée centrale (106 ; 206) qui s'étend à l'opposé du siège de soupape principal (103) vers le côté entrée de la soupape principale, le passage de dérivation (120 ; 124) s'étend à l'intérieur de la tige (106 ; 206) et la soupape de dérivation (126 ; 226) est située adjacente à une extrémité libre (136) de la tige (106 ; 206) avec au moins un orifice d'entrée (150) du passage de dérivation (120 ; 124) fourni à travers la tige (106 ; 206) ;
la fermeture de soupape principale (102 ; 202) est également guidée sur un côté opposé à la tige (106 ; 206) sur un roulement (112, 212) situé de manière coulissante sur un guide cylindrique creux (114 ; 214) supporté par le corps (104 ; 204), le passage de dérivation (120 ; 124) s'étendant à partir de la tige (106 ; 206) et à l'intérieur du guide cylindrique (114 ; 214) qui fournit une sortie de dérivation (122) à partir du passage de dérivation (120 ; 124) ;
le siège de soupape de dérivation (148 ; 248) est annulaire et le passage de dérivation (120 ; 124) s'étend à travers le siège de soupape de dérivation (148 ; 248) avec une tige de commande (128) qui s'étend depuis le côté sortie de la soupape principale à travers le guide cylindrique (114 ; 214), le long du passage de dérivation (120 ; 124) et à travers le siège de soupape de dérivation (148 ; 248) pour venir en prise avec la fermeture de soupape de dérivation (132 ; 232) ;
la tige de commande (128) est fournie pour venir en prise contre la fermeture de soupape de dérivation (132 ; 232) afin d'appliquer une sollicitation d'ouverture pour d'abord ouvrir la soupape de dérivation (126 ; 226) pour un degré requis d'égalisation de la pression à travers la fermeture de soupape principale (102 ; 202) et ensuite déplacer la fermeture de soupape principale (102 ; 202) à l'état ouvert ; et
la sollicitation d'ouverture de la tige de commande (128) est appliquée à un premier côté (130 ; 230) de la fermeture de soupape de dérivation (132 ; 232) et une sollicitation de fermeture vers le siège de soupape de dérivation (148 ; 248) est fournie sur un second côté (146 ; 246) de la fermeture de soupape de dérivation (132 ; 232), à l'opposé de la tige de commande (128).

2. Soupape selon la revendication 1, la sollicitation de fermeture étant fournie par la pression de fluide sur le second côté (146 ; 246) de la fermeture de soupape de dérivation (132 ; 232).

3. Soupape selon la revendication 1, la sollicitation de fermeture étant fournie par une sollicitation de ressort vers le siège de soupape de dérivation (148 ; 248) .

4. Soupape selon la revendication 1, la tige (106 ; 206) de la fermeture de soupape principale (102 ; 202) étant guidée par un autre roulement supporté dans un collier (108) par rapport au corps (103).

5. Soupape selon la revendication 1, la tige de commande (128) venant en prise avec la fermeture de soupape principale (102 ; 202) en sollicitant la fermeture de soupape de dérivation (132 ; 232) contre une paroi d'extrémité (142 ; 242) dans la chambre de soupape de dérivation (134 ; 234).

6. Soupape selon la revendication 1, la tige de commande (128) ayant une formation de mise en prise pour venir en prise avec la fermeture de soupape principale (102 ; 202) après avoir sollicité la fermeture de soupape de dérivation (132 ; 232) à l'opposé du siège de soupape de dérivation (148 ; 248).

7. Soupape selon la revendication 3, la chambre de soupape de dérivation (134 ; 234) ayant une paroi d'extrémité (142 ; 242) fournie par un capuchon (138 ; 238) au niveau d'une extrémité libre (136) de la tige (106 ; 206) avec une ouverture (144 ; 244) au-delà du capuchon (138 ; 238) dans la chambre de soupape de dérivation (134 ; 234) adjacente au second côté (146 ; 246) de la fermeture de soupape de dérivation (132 ; 232) .

8. Soupape selon la revendication 1, une section transversale du passage de dérivation (120 ; 124) se dilatant à travers une forme effilée vers l'extérieur autour de la tige de commande (128) à partir du siège de soupape de dérivation (148) ou à proximité de celui-ci vers ou jusqu'à une sortie de passage de dérivation (122) .

9. Soupape selon la revendication 8, des formations labyrinthiques (152 ; 156) étant situées sur la tige de commande (128) adjacente à la soupape de dérivation (126) et à l'intérieur du passage de dérivation (120 ; 124) autour de la tige de commande (128).
